# EUROPÄISCHE PATENTSCHRIFT

(11) **EP 3 380 676 B1**
(45) Veröffentlichungstag und Bekanntmachung des Hinweises auf die Patenterteilung: **19.02.2020**
(21) Anmeldenummer: 16823268.4
(22) Anmeldetag: 21.12.2016
(51) Int. Cl.: E02B 17/00, H01F 27/14, H02K 9/19, F03D 13/25, F03D 80/60

(54) **OFFSHOREBAUWERK**
OFFSHORE STRUCTURE
OUVRAGE OFFSHORE

(30) Priorität: 21.01.2016 DE 102016200800
(43) Veröffentlichungstag der Anmeldung: 03.10.2018
(73) Patentinhaber: Siemens Aktiengesellschaft, 80333 München (DE)
(72) Erfinder: FINDEISEN, Jörg, 01156 Dresden (DE)
(86) Internationale Anmeldenummer: PCT/EP2016/082058
(87) Internationale Veröffentlichungsnummer: WO 2017/125236

(56) Entgegenhaltungen:
- EP-A1- 2 733 265
- WO-A1-02/41336
- WO-A1-2006/069974
- CN-U- 202 501 648
- GB-A- 2 342 713

## Beschreibung

Die Erfindung betrifft ein Offshorebauwerk, welches eine Windkraftanlage umfasst, mit einem oberhalb des Meeresspiegels angeordneten Transformator.

Als Offshorebauwerke werden feststehende Bauwerke bezeichnet, die in der offenen See vor der Küste (engl.: offshore) errichtet wurden. Hierzu gehören beispielsweise Bohrinseln, Windkraftanlagen sowie Umspann- und Forschungsplattformen.

Für die sichere Errichtung von Offshorebauwerken sind dabei spezielle Gründungsstrukturen notwendig. Diese können beispielsweise im Meeresboden verankert sein. Mit Bohrinseln schon über längere Zeit erprobt sind hierbei Fachwerkkonstruktionen, die auf den Meeresboden gestellt werden (Jackets). Neuere Entwicklungen setzen entweder ebenfalls auf Konstruktionen, die auf dem Meeresboden stehen (Tripods, Schwergewichtsgründungen, Bucket-Fundamente) oder bedienen sich der Tragfähigkeit von Pfählen, die in den Meeresboden gerammt werden (Monopiles, Tripile-Gründungen). Alternativ kann die Gründungsstruktur auch schwimmend ausgebildet sein, d.h. als sogenanntes Schwimmfundament mit Auftriebskörpern, die zur Positionshaltung lediglich mit Ankern an Ketten o.ä. am Meeresboden befestigt werden.

Insbesondere in Windparks werden auch auf See elektrische Geräte benötigt, die für eine hohe Leistung ausgelegt und in eine Kühl- und Isolierflüssigkeit eingebettet sind, z.B. Transformatoren oder Drosseln. Das Gerät umfasst dabei in der Regel ein die elektrischen Komponenten umschließendes Gehäuse, welches mit der Isolierflüssigkeit, z.B. Öl aufgefüllt ist. Derartige abgeschlossene Gehäuse benötigen dabei ein Ausdehnungsgefäßsystem zum Ausgleich der sich durch unterschiedliche Betriebstemperaturen ergebenden Volumenschwankungen der Kühl- und Isolierflüssigkeit. Dieses Ausdehnungsgefäß wird z.B. bei Transformatoren zumeist auf dem Deckel des Transformators angeordnet.

Bei Offshorebauwerken wirkt sich diese Platzierung jedoch ungünstig aus, da sie erstens eine große Angriffsfläche für den Wind auf See bietet, was eine Auslegung für extreme Wetterbedingungen notwendig macht, d.h. Windgeschwindigkeiten von mehr als 200 km/h. Zweitens sind aufwändige Konsolen zur Befestigung und für Wartungsarbeiten notwendig. Drittens bedingt dies die Notwendigkeit von Entfeuchtungsmaßnahmen für den Luftaustausch bei den thermisch bedingten Volumenschwankungen der Isolierflüssigkeit im Ausdehnungsgefäß.

Zur zumindest teilweisen Lösung dieser Probleme wurde der hermetische Abschluss derartiger elektrischer Geräte unter Einschluss eines Gaspolsters vorgeschlagen, welches die Volumenschwankungen des Kühl- und Isolierfluides aufnimmt. Das Ausdehnungsgefäßsystem ist dabei geschlossen ausgeführt und sein Innenvolumen umfasst ein Gaspolster. Das Gehäuse des elektrischen Geräts ist über eine Rohrleitung mit dem Ausdehnungsgefäßsystem verbunden.

Aus der WO 02/41336 A1 und der GB 2 342 713 A sind hermetisch abgeschlossene Transformatoren für einen Einsatz unter Wasser bekannt.

Hierbei bedingen die Schwankungen der Außentemperatur durch den hohen Ausdehnungskoeffizienten der Gase jedoch erhebliche temperaturabhängige Druckschwankungen innerhalb der elektrischen Anlage, welche durch aufwändige Maßnahmen eingeschränkt werden müssen.

Es ist daher Aufgabe der Erfindung, ein Offshorebauwerk der eingangs genannten Art anzugeben, welches eine besonders einfache Konstruktion ermöglicht.

Diese Aufgabe wird erfindungsgemäß mit einem Offshorebauwerk gemäß Anspruch 1 gelöst.

Die Erfindung geht dabei von der Überlegung aus, dass die Druckschwankungen innerhalb des geschlossenen Ausgleichsbehältersystems dadurch verringert werden könnten, dass eine möglichst gleichbleibende Temperatur insbesondere im Gaspolster innerhalb des Ausgleichsbehältersystems erreicht wird. Das Gaspolster müsste also klimatisiert werden. Hierfür eignet sich aber in Offshore-Anwendungen insbesondere das umgebende Meerwasser, so dass eine besonders einfache Klimatisierung des Ausgleichsgefäßsystems und insbesondere des Gaspolsters durch eine räumliche Trennung des Ausgleichsgefäßsystems vom Transformator und eine Platzierung zumindest des Gaspolsters unterhalb des Meeresspiegels möglich ist. Die Platzierung erfolgt dabei derart, dass ein ausreichender Wärmeaustausch zwischen Gaspolster und Meerwasser möglich ist. Dadurch erfolgt eine weitgehende Kopplung der Temperatur des Gases an die Temperatur des die Gründungsstruktur umgebenden Seewassers. Beispielsweise kann ein gasgefüllter Ausgleichsbehälter an der Außenwand der Gründungsstruktur des Offshorebauwerks unterhalb des Meeresspiegels befestigt werden.

Vorteilhafterweise ist das gesamte Ausdehnungsgefäßsystem unterhalb des Meeresspiegels angeordnet, d.h. vom mit Kühl- und Isolierflüssigkeit gefüllten Gehäuse führt die Rohrleitung in einen Bereich unterhalb des Meeresspiegels, wo der oder die Komponenten des Ausdehnungsgefäßsystems angeordnet sind.

In einer ersten vorteilhaften Ausgestaltung umfasst das Ausdehnungsgefäßsystem ein einen Bereich mit Isolierflüssigkeit enthaltendes Ausdehnungsgefäß, wobei die Rohrleitung flüssigkeitsgefüllt und mit dem Bereich mit Isolierflüssigkeit im Ausdehnungsgefäß verbunden ist, sowie weiter eine mit dem im Ausdehnungsgefäß enthaltenen Teil des Gaspolsters über eine gasgefüllte Rohrleitung verbundene Kompressionskammer, wobei die Kompressionskammer unterhalb des Meeresspiegels angeordnet ist. In einer derartigen, mindestens zweiteiligen Ausführung des Ausdehnungsgefäßsystems kann der gesamte Flüssigkeitsbereich noch oberhalb des Meeresspiegels angeordnet werden, lediglich ein Teil des Gaspolsters wird mittels entsprechender Rohrleitungen zumindest teilweise unterhalb des Meeresspiegels in einer separaten Kompressionskammer angeordnet.

Bei steigender Temperatur dehnt sich die Isolierflüssigkeit aus und verdrängt das Gas durch die Rohrleitung in die Kompressionskammer des Ausdehnungsgefäßsystems. Da sich nun der größte Teil des Gases innerhalb der Kompressionskammer befindet und diese durch die thermische Kopplung an die Wassertemperatur kaum Temperaturschwankungen aufweist, kann der Volumenausdehnungskoeffizient des Gases nur wenig wirksam werden und hat nur einen geringen Einfluss auf den Innendruck des Transformators und sein Ausdehnungsgefäßsystem.

In einer weiteren vorteilhaften Ausgestaltung umfasst das Offshorebauwerk zumindest einen zweiten Transformator, der ein mit einer Isolierflüssigkeit gefülltes zweites Gehäuse umfasst, wobei das Ausdehnungsgefäßsystem ein zweites Ausdehnungsgefäß umfasst, wobei das zweite Gehäuse über eine zweite flüssigkeitsgefüllte Rohrleitung mit einem einen zweiten Bereich mit Isolierflüssigkeit enthaltenden zweiten Ausdehnungsgefäß im Ausdehnungsgefäßsystem verbunden ist, wobei der im zweiten Ausdehnungsgefäß enthaltene Teil des Gaspolsters über eine zweite gasgefüllte Rohrleitung mit der Kompressionskammer verbunden ist. Mit anderen Worten: Die Ausdehnungsgefäße mehrerer elektrischer Geräte sind miteinander verbunden und nutzen ein gemeinsames Kompressionsvolumen.

In einer zweiten, alternativen vorteilhaften Ausgestaltung des Offshorebauwerks ist die Rohrleitung gasgefüllt. In einer derartigen Ausführungsform umfasst das Gehäuse des Transformators selbst bereits einen Teil des Gaspolsters, der über die Rohrleitung mit dem Raum im Ausdehnungsgefäßsystem verbunden ist. Das Ausdehnungsgefäßsystem ist dabei ausschließlich gasgefüllt.

Auch in einer derartigen Ausführung können mehrere Transformatoren ein gemeinsames Ausdehnungsgefäßsystem nutzen. Hierzu umfasst das Offshorebauwerk vorteilhafterweise einen zweiten Transformator, der ein mit einer Isolierflüssigkeit gefülltes zweites Gehäuse umfasst, wobei das zweite Gehäuse über eine gasgefüllte Rohrleitung mit dem Ausdehnungsgefäßsystem verbunden ist.

Hierbei ist vorteilhafterweise eine Mehrzahl von miteinander verbundenen Ausdehnungsgefäßen und/oder Kompressionskammern vorhanden. Dies ermöglicht eine flexiblere Anordnung auch an unterschiedlichen Orten unterhalb des Meeresspiegels sowie die Verwendung des Ausdehnungsgefäßsystems für mehrere Transformatoren. Weiterhin wird dadurch eine Anpassung an vorhandene Geometrien der Gründungsstruktur, beispielsweise bei der Nutzung der Rohre einer Fachwerkkonstruktion, vereinfacht.

In besonders vorteilhafter Ausgestaltung ist der unterhalb des Meeresspiegels angeordnete Teil des Gaspolsters, d.h. insbesondere Ausdehnungsgefäß und/oder Kompressionskammern, in einem Hohlstrukturelement der Gründungsstruktur des Offshorebauwerks angeordnet. Dies ermöglicht eine besonders einfache und platzsparende Bauweise.

Das Hohlstrukturelement bildet dabei vorteilhafterweise zumindest teilweise eine das Gaspolster einschließende Wandung, d.h. eine Wandung des Hohlstrukturelements ist gleichzeitig eine Wandung der Kompressionskammer. Im Extremfall kann das Hohlstrukturelement sogar als Ganzes die Kompressionskammer bilden.

Ist dies nicht der Fall und es verbleibt zwischen Kompressionskammer und Hohlstrukturelement ein·Raum, ist dieser zur Sicherstellung eines guten Wärmeaustauschs vorteilhafterweise mit Wasser gefüllt.

In weiterer vorteilhafter Ausgestaltung umfasst ein Ausdehnungsgefäß eine Membran, die Gaspolster und Isolierflüssigkeit voneinander trennt. Durch eine derartige elastische Membran wird weitgehend vermieden, dass sich das Gas im Ausdehnungsgefäßsystem in der Kühl- und Isolierflüssigkeit löst.

Weiterhin weist die flüssigkeitsgefüllte Rohrleitung zwischen Gehäuse und Ausdehnungsgefäßsystem vorteilhafterweise ein Buchholzrelais auf. Bei der hier vorgeschlagenen Ausführung ist es nämlich im Gegensatz zu einer Ausführung mit Dehnradiatoren überhaupt erst möglich, ein Buchholzrelais zu verwenden. Dieses zeigt Fehler wie Kurzschlüsse, Windungsschlüsse oder auch einen Mangel an Kühl- und Isolierflüssigkeit an und erhöht damit die Betriebssicherheit.

Die mit der Erfindung erzielten Vorteile bestehen insbesondere darin, dass durch die Anordnung des Gaspolsters eines hermetisch abgeschlossenen Ausdehnungsgefäßsystems zumindest teilweise unterhalb des Meeresspiegels ein Wärmeaustausch zwischen Meerwasser und Gas und damit eine Temperaturvergleichmäßigung des Gases erreicht wird. Hierdurch werden Druckschwankungen innerhalb des eines Transformators vermindert. Es kann eine drastische Verkleinerung der bisher recht großvolumigen Kompensationsgefäße erzielt werden.

Die beschriebene Lösung bietet somit eine vereinfachte Möglichkeit für den Sauerstoff- und Feuchteabschluss (Hermetisierung) der fluidgefüllten Komponenten eines Offshore-Umspannwerkes. Die Lösung bietet sich insbesondere beim Einsatz alternativer Isolierflüssigkeiten an. Weiterhin wird durch den Entfall von Entfeuchtungsmaßnahmen weitgehende Wartungsfreiheit erzielt.

Weiterhin lässt sich·durch die beschriebene Lösung eine Verringerung der Gesamthöhe des Transformators erreichen. Eine besonders geringe Bauhöhe ist wünschenswert, da die Nähe zum Rotationskreis des Rotorblattes einer Windkraftanlage die Bauhöhe des Transformators auf einer Windkraftanlage mit eigener Umspann-Substation einschränkt. Die Nutzung der vorgeschlagenen Lösung würde den Einsatz konventioneller Gründungsstrukturen wesentlich begünstigen. Auch bei einer Einhausung des Transformators ergeben sich Vorteile aus der Reduzierung der Bauhöhe der Zelle um ca. 2-3 m.

Ausführungsbeispiele der Erfindung werden anhand von Zeichnungen näher erläutert. Darin zeigen:
- FIG 1: eine Offshore-Windkraftanlage mit einem Transformator mit einem Ausdehnungsgefäß in der Gründungsstruktur,
- FIG 2: ein Offshore-Umspannwerk mit einem Transformator und Kompressionskammern in der Gründungsstruktur,
- FIG 3: ein weiteres Offshore-Umspannwerk mit einem Transformator und Kompressionskammern in der Gründungsstruktur,
- FIG 4: eine Offshore-Windkraftanlage mit zwei Transformatoren mit jeweils einem Ausdehnungsgefäß und einer Kompressionskammer in der Gründungsstruktur,
- FIG 5: eine weitere Offshore-Windkraftanlage mit zwei Transformatoren mit jeweils einem Ausdehnungsgefäß und einer Kompressionskammer in der Gründungsstruktur, und
- FIG 6: eine weitere Offshore-Windkraftanlage mit einem Transformator mit integriertem Ausdehnungsraum und einer Kompressionskammer in der Gründungsstruktur.

Gleiche Teile sind in allen Zeichnungen mit denselben Bezugszeichen versehen.

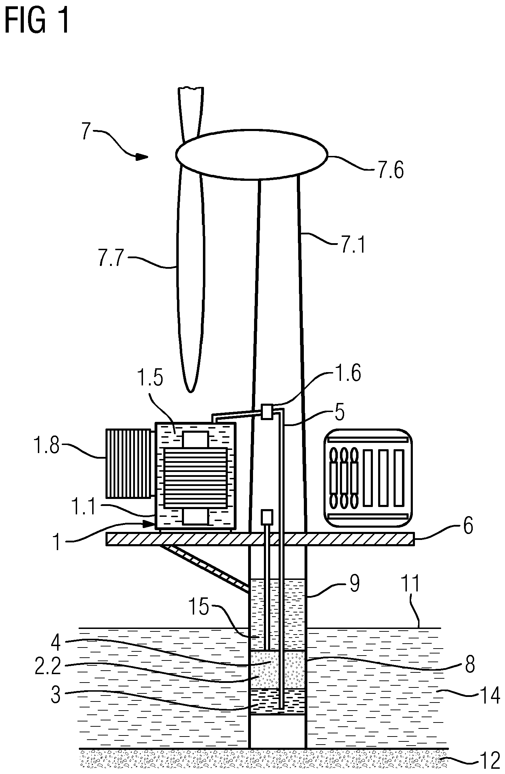

FIG 1 zeigt ein Ausführungsbeispiel für eine an der Gründungsstruktur 9 einer Offshore-Windkraftanlage 7 angeordnete Substation 6 für einen Offshore Windpark. Die Substation 6 verfügt über einen Transformator 1 mit einem hermetisch abgeschlossenen Gehäuse 1.1, das mit einer Isolierflüssigkeit 1.5 gefüllt ist, sowie weiter über eine Kühlanlage 1.8. Die Gründungsstruktur 9 fixiert die Windkraftanlage 7 mit ihrem Turm 7.1, der Gondel 7.6 und dem daran befestigten Rotor 7.7 im Meeresboden 12.

Über eine Rohrleitung 5, die mit einem Buchholzrelais 1.6 ausgestattet ist, erfolgt infolge der thermisch bedingten Volumenschwankungen der Isolierflüssigkeit 1.5 der Fluss derselben in eine Kompressionskammer 2.2, welche in einem Hohlstrukturelement 8 der Gründungsstruktur 9 eingebettet ist. Die Kompressionskammer 2.2 ist derart dimensioniert, dass über dem sich ändernden Spiegel der Isolierflüssigkeit 3 Raum für ein die Volumenschwankungen des Fluides aufnehmendes Gaspolster 4 gebildet wird. Die Rohrleitung 5 zur Kompressionskammer 2.2 führt zum Boden derselben, so dass unabhängig vom Füllstand stets eine Füllung der Verbindungsleitung zum Transformator mit Isolierflüssigkeit 1.5, 3 gewährleistet ist.

Die Kompressionskammer 2.2 wird derart in einem Hohlstrukturelement 8 der Gründungsstruktur angeordnet, dass sie sich weitgehend unter dem Meeresspiegel 11 befindet. Das Hohlstrukturelement 8 ist mit Süßwasser 15 gefüllt. Das Gaspolster 4 nimmt nun weitgehend die Temperatur des umgebenden Meerwassers 14 an. Beispielsweise schwankt die Wassertemperatur in weiten Bereichen der Nordsee nur zwischen 4°C und 18°C. Damit kann der hermetisch abgeschlossene Transformator 1 mit einem drastisch reduzierten Druckspiel arbeiten. Die Kompressionskammern lassen sich deutlich verkleinern.

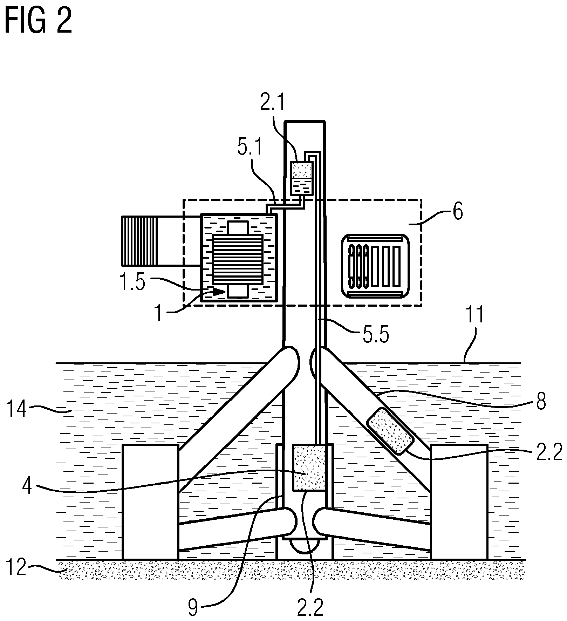

FIG 2 zeigt ein Offshore-Umspannwerk 6, welches auf einer Plattform angeordnet ist, deren Gründungsstruktur 9 aus einer mehrteiligen Rohrstruktur gebildet wird. Im Ausführungsbeispiel der FIG 2 wird das Ausdehnungsgefäßsystem durch mehrere getrennte Ausdehnungsgefäße 2.1, 2.2 gebildet. Das Ausdehnungsgefäß 2.1 ist über eine Rohrleitung 5.5 mit weiteren Kompressionskammern 2.2 für das Gaspolster 4 verbunden, welche derart angeordnet sind, dass eine thermische Entkopplung des Gaspolsters 4 von der Temperatur der Isolierflüssigkeit 1.5 im Transformator 1 erfolgt. Im Ausführungsbeispiel werden sowohl das Ausdehnungsgefäß 2.1, als auch die vom Transformator 1 thermisch entkoppelte Kompressionskammer 2.2 durch Blechzylinder gebildet.

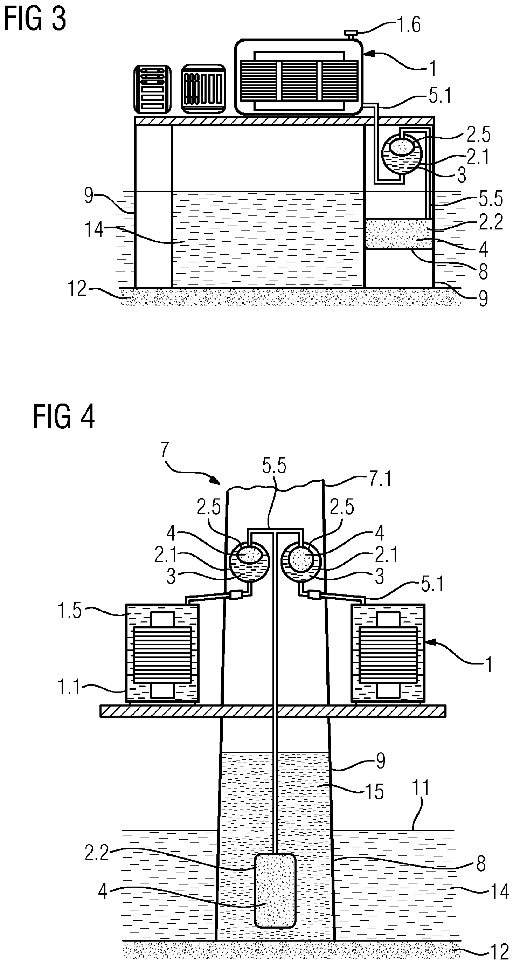

FIG 3 zeigt ein Offshore-Umspannwerk 6 welches sich auf einer Plattform befindet. Diese Plattform ist über rohrförmige Hohlstrukturelemente 8 auf dem Meeresboden 12 verankert. Im Ausführungsbeispiel werden diese Hohlstrukturelemente 8 zur Aufnahme des aus einem Ausdehnungsgefäß 2.1 und einer Kompressionskammer 2.2 gebildeten Ausdehnungsgefäßsystems genutzt. Im Ausführungsbeispiel bildet ein Segment der Gründungsstruktur 9 die Kompressionskammer 2.2. Die Mantelfläche des Hohlstrukturelementes 8 bildet einen Teil des Gehäuses der Kompressionskammer 2.2. Das Gaspolster 4 wird in diesem speziellen Ausführungsbeispiel durch eine Membran 2.5, welche innerhalb des Ausdehnungsgefäßes 2.1 für die Isolierflüssigkeit 3 angeordnet ist, von der Isolierflüssigkeit 3 getrennt. Durch diese Trennung wird die Lösung des Gases des Gaspolsters 4 in der Isolierflüssigkeit 3 weitgehend vermieden.

FIG 4 zeigt schließlich ein Ausführungsbeispiel, bei dem ein Offshore-Umspannwerk 6 in die den Turm 7.1 einer Windkraftanlage 7 aufnehmende Hohlstruktur integriert ist. Im Ausführungsbeispiel verfügt das Umspannwerk 6 über mehrere fluidgefüllte Komponenten (Transformatoren 1 und Drosseln) welche jeweils über ein eigenes Ausdehnungsgefäß 2.1 für die Isolierflüssigkeit 3 verfügen. Die Ausdehnungsgefäße 2.1 sind jeweils gasseitig über Rohrleitungen 5.5 mit einer gemeinsamen Kompressionskammer 2.2 verbunden. Zur Aufnahme des Kompressionsgases 4 nutzen demzufolge mehrere Transformatoren 1 eine gemeinsame Kompressionskammer 2.2 unterhalb des Meeresspiegels 11, bei Aufrechterhaltung der Trennung der Isolierflüssigkeiten 1.5, 3.

Durch die Nutzung eines gemeinsamen Kompressionsvolumens lässt sich eine Reduktion des Gesamtvolumens realisieren, da nicht alle Komponenten die gleiche Betriebstemperatur aufweisen. Weiterhin kann auf diese Weise ein Teil der Anlagen im Überlastbetrieb arbeiten, ohne dass eine entsprechende Dimensionierung der Einzelkompressionskammern notwendig ist.

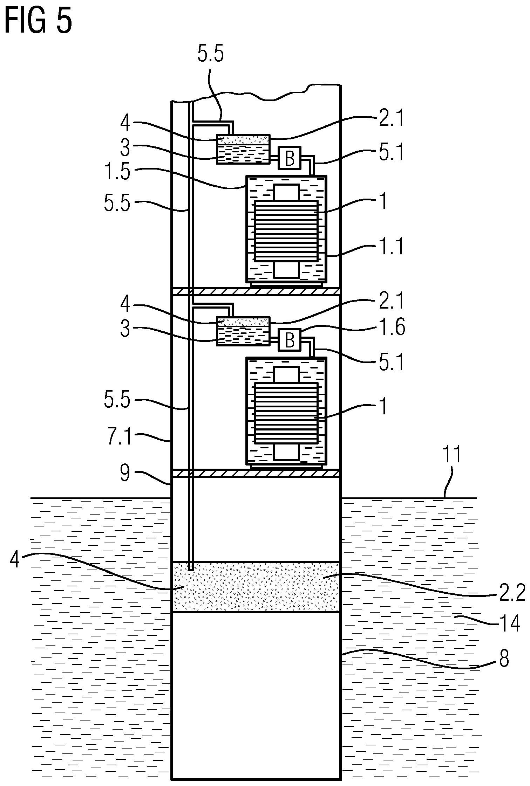

FIG 5 zeigt ebenfalls ein Ausführungsbeispiel, bei dem mehrere Transformatoren 1 im Turm 7.1 bzw. der Gründungsstruktur 9 einer Windkraftanlage 7 angeordnet sind. Die Transformatoren 1 verfügen jeweils über ein eigenes Ausdehnungsgefäß 2.1. Die Ausdehnungsgefäße 2.1 sind über Rohrleitungen 5.5 mit einer von mehreren Transformatoren 1 gemeinsam genutzten Kompressionskammer 2.2 verbunden.

Weiterhin sind im Ausführungsbeispiel sowohl die Transformatoren 1, als auch das Ausdehnungsgefäßsystem mit Kompressionskammer 2.2 innerhalb der Gründungsstruktur 9 bzw. dem Turm 7.1 einer Windkraftanlage 7 angeordnet. Die Kühlung des Transformators 1 kann sowohl über Öl-Wasserkühler als auch Luftkühler oder Radiatoren realisiert werden und ist im Ausführungsbeispiel nicht dargestellt.

Im Ausführungsbeispiel stellt die Wandung der Gründungsstruktur 9 zumindest teilweise das Gehäuse des Ausdehnungsgefäßsystems bzw. der Kompressionskammer 2.2 dar.

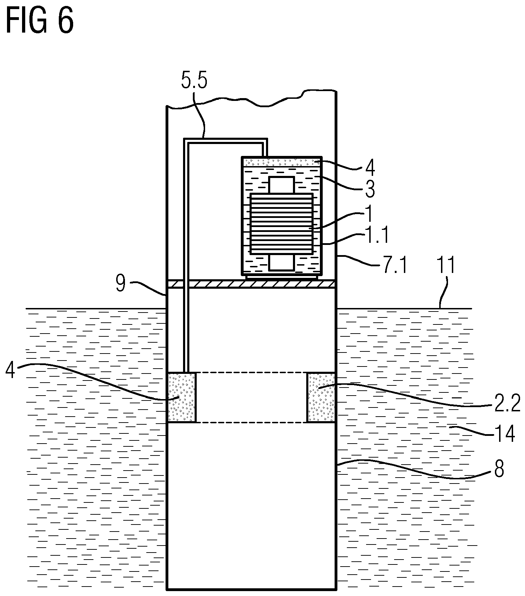

FIG 6 zeigt ein Ausführungsbeispiel, bei dem der Ausdehnungsraum zur Aufnahme der temperaturbedingten Volumenschwankungen der Isolierflüssigkeit 1.5 innerhalb des Transformatorengehäuses 1.1 angeordnet ist. Der nicht von der Isolierflüssigkeit beanspruchte Raum, sowie die Rohrleitung 5.5 und die Kompressionskammer 2.2 des Ausdehnungsgefäßsystems sind mit einem Gaspolster 4 gefüllt. Bei steigender Temperatur dehnt sich die Isolierflüssigkeit 1.5, 3 aus und verdrängt das Gas durch die Rohrleitung 5.5 in die Kompressionskammer 2.2 des Ausdehnungsgefäßsystems. Da sich nun der größte Teil des Gases innerhalb der Kompressionskammer 2.2 befindet und diese durch die thermische Kopplung an die Wassertemperatur kaum Temperaturschwankungen aufweist, kann der Volumenausdehnungskoeffizient des Gases nur wenig wirksam werden und hat nur einen geringen Einfluss auf den Innendruck des Transformators 1 und seines Ausdehnungsgefäßsystems.

In den FIG 5 und 6 ist keine Fixierung der Gründungsstruktur 9 am Meeresboden 12 gezeigt, da die Gründungsstruktur 9 auch als Schwimmfundament ausgelegt sein kann.

### Bezugszeichenliste

- 1: Transformator
- 1.1: Gehäuse
- 1.5: Isolierflüssigkeit
- 1.6: Buchholzrelais
- 1.8: Kühlanlage
- 2.1: Ausdehnungsgefäß
- 2.2: Kompressionskammer
- 2.5: Membran
- 3: Isolierflüssigkeit
- 4: Gaspolster
- 5, 5.1 5.5: Rohrleitung
- 6: Offshore-Umspannwerk
- 7: Windkraftanlage
- 7.1: Turm
- 7.6: Gondel
- 7.7: Rotor
- 8: Hohlstrukturelement
- 9: Gründungsstruktur
- 11: Meeresspiegel
- 12: Meeresboden
- 14: Meerwasser
- 15: Süßwasser

## Patentansprüche

1. Offshorebauwerk (6, 7), welches eine Windkraftanlage umfasst, mit einem Transformator (1), der ein mit einer Isolierflüssigkeit (1.5) gefülltes Gehäuse (1.1) umfasst, weiter umfassend ein Ausdehnungsgefäßsystem, dessen Innenvolumen ein Gaspolster (4) umfasst, wobei das Gehäuse (1.1) über eine Rohrleitung (5, 5.1, 5.5) mit dem Ausdehnungsgefäßsystem verbunden ist, wobei Gehäuse (1.1), Rohrleitung (5, 5.1, 5.5) und Ausdehnungsgefäßsystem eine druckfeste, hermetisch abgeschlossene Einheit bilden, und wobei zumindest ein Teil des Gaspolsters (4) unterhalb des Meeresspiegels (11) und der Transformator (1) oberhalb des Meeresspiegels (11) angeordnet ist.

2. Offshorebauwerk (6, 7) nach Anspruch 1, bei dem das gesamte Ausdehnungsgefäßsystem unterhalb des Meeresspiegels (11) angeordnet ist.

3. Offshorebauwerk (6, 7) nach einem der vorhergehenden Ansprüche, bei dem das Ausdehnungsgefäßsystem ein einen Bereich mit Isolierflüssigkeit (3) enthaltendes Ausdehnungsgefäß (2.1) umfasst, wobei die Rohrleitung (5, 5.1) flüssigkeitsgefüllt und mit dem Bereich mit Isolierflüssigkeit (3) im Ausdehnungsgefäß (2.1) verbunden ist, wobei das Ausdehnungsgefäßsystem weiter einen mit dem im Ausdehnungsgefäß (2.1) enthaltenen Teil des Gaspolsters (4) über eine gasgefüllte Rohrleitung (5.5) verbundene Kompressionskammer (2.2) umfasst, wobei die Kompressionskammer (2.2) unterhalb des Meeresspiegels (11) angeordnet ist.

4. Offshorebauwerk (6, 7) nach Anspruch 3 mit zumindest einem zweiten elektrischen Gerät (1), welches ein mit einer Isolierflüssigkeit (1.5) gefülltes zweites Gehäuse (1.1) umfasst, wobei das Ausdehnungsgefäßsystem ein zweites Ausdehnungsgefäß (2.1) umfasst, wobei das zweite Gehäuse (1.1) über eine zweite flüssigkeitsgefüllte Rohrleitung (5, 5.1) mit einem einen zweiten Bereich mit Isolierflüssigkeit (3) enthaltenden zweiten Ausdehnungsgefäß (2.1) im Ausdehnungsgefäßsystem verbunden ist, wobei der im zweiten Ausdehnungsgefäß (2.1) enthaltene Teil des Gaspolsters (4) über eine zweite gasgefüllte Rohrleitung (5.5) mit der Kompressionskammer (2.2) verbunden ist.

5. Offshorebauwerk (6, 7) nach Anspruch 1 oder 2, bei dem die Rohrleitung (5.5) gasgefüllt ist.

6. Offshorebauwerk (6, 7) nach Anspruch 5 mit zumindest einem zweiten elektrischen Gerät (1), welches ein mit einer Isolierflüssigkeit (1.5) gefülltes zweites Gehäuse (1.1) umfasst, wobei das zweite Gehäuse (1.1) über eine gasgefüllte Rohrleitung (5.5) mit dem Ausdehnungsgefäßsystem verbunden ist.

7. Offshorebauwerk (6, 7) nach einem der vorhergehenden Ansprüche, umfassend eine Mehrzahl von miteinander verbundenen Ausdehnungsgefäßen (2, 2.1) und/oder Kompressionskammern (2.5).

8. Offshorebauwerk (6, 7) nach einem der vorhergehenden Ansprüche, bei dem der unterhalb des Meeresspiegels (11) angeordnete Teil des Gaspolsters (4) in einem Hohlstrukturelement (8) der Gründungsstruktur (9) des Offshorebauwerks (6, 7) angeordnet ist.

9. Offshorebauwerk (6, 7) nach Anspruch 8, bei dem das Hohlstrukturelement zumindest teilweise eine das Gaspolster einschließende Wandung bildet.

10. Offshorebauwerk (6, 7) nach zumindest Anspruch 5 und 8, bei dem ein zwischen der Kompressionskammer (2.2) und dem Hohlstrukturelement (8) verbleibender Raum mit Wasser gefüllt ist.

11. Offshorebauwerk (6, 7) nach zumindest Anspruch 3, bei dem ein Ausdehnungsgefäß (2, 2.1) eine Membran (2.5) umfasst, die Gaspolster und Isolierflüssigkeit voneinander trennt.

12. Offshorebauwerk (6, 7) nach zumindest Anspruch 3, bei dem die flüssigkeitsgefüllte Rohrleitung (5, 5.1) ein Buchholzrelais (1.6) aufweist.

## Claims

1. Offshore structure (6, 7) which comprises a wind power installation, having a transformer (1) which comprises a housing (1.1) which is filled with an insulating liquid (1.5), further comprising an expansion vessel system whose inner volume comprises a gas cushion (4), wherein the housing (1.1) is connected to the expansion vessel system via a pipeline (5, 5.1, 5.5), wherein housing (1.1), pipeline (5, 5.1, 5.5) and expansion vessel system form a pressure-tight, hermetically sealed unit, and wherein at least part of the gas cushion (4) is arranged below the sea level (11) and the transformer (1) is arranged above the sea level (11).

2. Offshore structure (6, 7) according to Claim 1, in which the entire expansion vessel system is arranged below the sea level (11).

3. Offshore structure (6, 7) according to either of the preceding claims, in which the expansion vessel system comprises an expansion vessel (2.1) containing a region with insulating liquid (3), wherein the pipeline (5, 5.1) is filled with liquid and is connected to the region with insulating liquid (3) in the expansion vessel (2.1), wherein the expansion vessel system further comprises a compression chamber (2.2) which is connected via a gas-filled pipeline (5.5) to that part of the gas cushion (4) which is contained in the expansion vessel (2.1), wherein the compression chamber (2.2) is arranged below the sea level (11).

4. Offshore structure (6, 7) according to Claim 3, having at least one second electrical device (1) which comprises a second housing (1.1) which is filled with an insulating liquid (1.5), wherein the expansion vessel system comprises a second expansion vessel (2.1), wherein the second housing (1.1) is connected via a second liquid-filled pipeline (5, 5.1) to a second expansion vessel (2.1) in the expansion vessel system, which vessel contains a second region with insulating liquid (3), wherein that part of the gas cushion (4) which is contained in the second expansion vessel (2.1) is connected to the compression chamber (2.2) via a second gas-filled pipeline (5.5) .

5. Offshore structure (6, 7) according to Claim 1 or 2, in which the pipeline (5.5) is filled with gas.

6. Offshore structure (6, 7) according to Claim 5, having at least one second electrical device (1) which comprises a second housing (1.1) which is filled with an insulating liquid (1.5), wherein the second housing (1.1) is connected to the expansion vessel system via a gas-filled pipeline (5.5).

7. Offshore structure (6, 7) according to one of the preceding claims, comprising a plurality of interconnected expansion vessels (2, 2.1) and/or compression chambers (2.5).

8. Offshore structure (6, 7) according to one of the preceding claims, in which that part of the gas cushion (4) which is arranged below the sea level (11) is arranged in a hollow structural element (8) of the foundation structure (9) of the offshore structure (6, 7).

9. Offshore structure (6, 7) according to Claim 8, in which the hollow structural element at least partially forms a wall enclosing the gas cushion.

10. Offshore structure (6, 7) according to at least Claims 5 and 8, in which a space remaining between the compression chamber (2.2) and the hollow structural element (8) is filled with water.

11. Offshore structure (6, 7) according to at least Claim 3, in which an expansion vessel (2, 2.1) comprises a diaphragm (2.5) which separates gas cushion and insulating liquid from one another.

12. Offshore structure (6, 7) according to at least Claim 3, in which the liquid-filled pipeline (5, 5.1) has a Buchholz relay (1.6).

## Revendications

1. Ouvrage (6, 7) offshore, qui comprend une éolienne ayant un transformateur (1), qui comprend une cuve (1.1) emplie d'un liquide (1.5) isolant, comprenant, en outre, un système de vase de dilatation, dont le volume intérieur comprend un coussin (4) de gaz, la cuve (1.1) communiquant avec le système de vase de dilatation par une canalisation (5, 5.1, 5.5), cuve (1.1), canalisation (5, 5.1, 5.5) et système de vase de dilatation formant une unité résistante à la pression et fermée d'une manière hermétique, et dans lequel au moins une partie du coussin (4) de gaz est disposé en dessous du niveau (11) de la mer et le transformateur (1) au dessus du niveau (11) de la mer.

2. Ouvrage (6, 7) offshore suivant la revendication 1, dans lequel tout le système de vase de dilatation est disposé en dessous du niveau (11) de la mer.

3. Ouvrage (6, 7) offshore suivant l'une des revendications précédentes, dans lequel le système de vase de dilatation comprend un vase (2.1) de dilatation, comportant une partie ayant du liquide (3) isolant, la canalisation (5, 5.1) étant emplie de liquide et communiquant avec la partie ayant du liquide (3) isolant du vase (2.1) de dilatation, le système de vase de dilatation comprenant, en outre, une chambre (2.2) de compression communiquant avec la partie, contenue dans le vase (2.1) de dilatation, du coussin (4) de gaz par une canalisation (5.5) emplie de gaz, la chambre (2.2) de compression étant disposée en dessous du niveau (11) de la mer.

4. Ouvrage (6, 7) offshore suivant la revendication 3, comprenant au moins un deuxième appareil (1) électrique, qui comprend une deuxième cuve (1.1) emplie d'un liquide (1.5) isolant, le système de vase de dilatation comprenant un deuxième vase (2.1) de dilatation, la deuxième cuve (1.1) communiquant par une deuxième canalisation (b, b.1) emplie de liquide avec un deuxième vase (2.1) de dilatation, contenant une deuxième partie ayant du liquide (3) isolant, du système de vase de dilatation, la partie, contenue dans le deuxième vase (2.1) de dilatation, du coussin (4) de gaz communiquant avec la chambre (2.2) de compression par une deuxième canalisation (5.5) emplie de gaz.

5. Ouvrage (6, 7) offshore suivant la revendication 1 ou 2, dans lequel la canalisation (5.5) est emplie de gaz.

6. Ouvrage (6, 7) offshore suivant la revendication 5, comprenant au moins un deuxième appareil (1) électrique, qui comprend une deuxième cuve (1.1) emplie d'un liquide (1.5) isolant, la deuxième cuve (1.1) communiquant avec le système de vase de dilatation par une canalisation (5.5) emplie de gaz.

7. Ouvrage (6, 7) offshore suivant l'une des revendications précédentes, comprenant une pluralité de vases (2, 2.1) de dilatation et/ou de chambres (2.5) de compression communiquant entre eux.

8. Ouvrage (6, 7) offshore suivant l'une des revendications précédentes, dans lequel la partie, disposée en dessous du niveau (11) de la mer, du coussin (4) de gaz, est disposée dans un élément (8) de structure creux de la structure (9) de base de l'ouvrage (6, 7) offshore.

9. Ouvrage (6, 7) offshore suivant la revendication 8, dans lequel l'élément de structure creux forme, au moins en partie, une paroi enfermant le coussin de gaz.

10. Ouvrage (6, 7) offshore suivant au moins la revendication 5 et 8, dans lequel un espace restant entre la chambre (2.2) de compression et l'élément (8) de structure creux est empli d'eau.

11. Ouvrage (6, 7) offshore suivant au moins la revendication 3, dans lequel un vase (2, 2.1) de dilatation comprend une membrane (2.5), qui sépare le coussin de gaz et le liquide isolant.

12. Ouvrage (6, 7) offshore suivant au moins la revendication 3, dans lequel la canalisation (5, 5.1) emplie de liquide a un relais (1.6) Buchholz.
